# EUROPÄISCHE PATENTSCHRIFT

(11) **EP 1 830 979 B1**
(45) Veröffentlichungstag und Bekanntmachung des Hinweises auf die Patenterteilung: **08.09.2010**
(21) Anmeldenummer: 05821397.6
(22) Anmeldetag: 30.11.2005
(51) Int. Cl.: B23K 11/31

(54) **VERFAHREN ZUR STEUERUNG EINER AUSGLEICHSZYLINDEREINHEIT INSBESONDERE FÜR EINE SCHWEISSVORRICHTUNG**
METHOD FOR CONTROLLING A COMPENSATION CYLINDER UNIT, IN PARTICULAR FOR A WELDING DEVICE
PROCEDE POUR COMMANDER UNE UNITE A CYLINDRE DE COMPENSATION DESTINEE EN PARTICULIER A UN DISPOSITIF DE SOUDURE

(30) Priorität: 23.12.2004 DE 102004063463
(43) Veröffentlichungstag der Anmeldung: 12.09.2007
(73) Patentinhaber: Norgren GmbH, 70736 Fellbach (DE)
(72) Erfinder: BRAUN, Florian, 73760 Ostfildern (DE); LAUBACHER, Thomas, 71336 Waiblingen (DE); SCHNEIDER-KÖNIG, Helmut, 73630 Remshalden (DE); SCHNUR, Frank, 74357 Bönnigheim (DE)
(74) Vertreter: Lanoe, Benjamin
(86) Internationale Anmeldenummer: PCT/DE2005/002161
(87) Internationale Veröffentlichungsnummer: WO 2006/066528

(56) Entgegenhaltungen:
- EP-A- 0 715 925
- EP-A- 1 010 491
- DE-U1- 20 107 328
- US-A- 4 712 470

## Beschreibung

Die Erfindung betrifft ein Verfahren zur Steuerung einer Ausgleichszylindereinheit zur Einstellung eines Gewichtsausgleiches von Elektrodenarmen einer Schweißvorrichtung nach dem Oberbegriff des Anspruchs 1.

Solche Ausgleichszylindereinheiten kommen beispielsweise bei fluidischen Schweißzangen, wie sie aus der DE 201 07 328 U1 bekannt geworden sind, zum Einsatz. Sie können darüber hinaus bei Nietvorrichtungen, bei Ultraschall-Schweißvorrichtungen und ganz allgemein bei Handhabungsautomaten eingesetzt werden, bei denen zwei Arme eine zangenartige Bewegung ausführen.

Die EP 0 715 925 A1 offenbart eine gattungsgemäße Kolbenzylinderanordnung als Antrieb für Elektroden einer Schweißvorrichtung.

Aus der EP 1 010 491 geht ein Widerstandsschweißapparat und ein Verfahren zu seiner Herstellung hervor, bei dem ein Pistolenarm, ein Schweißtransformator und eine Antriebseinheit individuell als eine Einheit mit einer gemeinsamen Basis als deren Bezugspunkt montiert und entfernt werden können. Mit einem solchen Schweißapparat werden Werkstücke in Form von sich überlappenden Blechen durch und zwischen den Elektrodenspitzen zusammengehalten und es wird eine Druckkraft, die für das Schweißen erforderlich ist, auf die zwei Elektrodenspitzen ausgeübt, wobei ein Schweißstrom, der durch die zwei Elektrodenspitzen fließt, zum Erhitzen und damit zum Verbinden der beiden Bleche durch Schweißen verwendet wird.

Aus der US 4 712 470 ist ein Verfahren und eine Vorrichtung zum Ausgleich des auf einen hydraulischen Antrieb wirkenden veränderlichen Gewichtes einer Masse, insbesondere für den senkrecht stehenden Antriebszylinder einer Läppmaschine bekannt geworden, bei der eine Gewichtsveränderung der dem Verschleiß unterliegenden Läppmaschine automatisch erfasst wird, indem der Druckwert gemessen wird, der erforderlich ist, um das Gewicht abstützungsfrei in der Schwebe zu halten. Der Druckwert wird gespeichert und dann anschließend in einem Druckregelvorgang als Ausgleichsgröße dem Druckregelkreis eingespeist. Hierdurch wird der Gewichtsausgleich an einem Antrieb mit veränderlicher Masse automatisiert, um bei einer Läppmaschine eine Bearbeitung des Werkstücks mit einem vorgebbaren Bearbeitungsdruck zu ermöglichen.

Bei pneumatischen Schweißzangen wird ein Arm der Schweißzange durch einen Zylinder über ein variables Druckverhältnis in der Schwebe gehalten.

Problematisch ist nun, daß zu jeder von der Raumlage abhängigen Gewichtskraft ein definiertes Druckverhältnis eingestellt und gespeichert werden muß.

Dabei kann vorgesehen sein, daß ein Kammerdruck einer Kolbenzylinderanordnung auf einer Seite mit einem Handdruckregler eingestellt und auf der Gegenseite des Kolbens mittels eines Proportional-Druckregelventils über- oder untersteuert wird.

Alternativ können auch beide Druckräume der Ausgleichszylindereinheit mit je einem Proportionalventil angesteuert werden, um so das benötigte Druckverhältnis und damit in zwei Richtungen wirkende Kräfte zu erreichen. Schließlich sind auch Federpakete denkbar, um die unterschiedlichen Gewichtskräfte zu berücksichtigen.

Problematisch bei diesen Anordnungen ist es, daß sie in der Praxis nur unzureichend funktionieren und insbesondere gegenüber Schmutz, einer Veränderung der Reibungsverhältnisse und Temperatureinflüssen anfällig sind.

Der Erfindung liegt daher die Aufgabe zugrunde, ein Verfahren zur Steuerung einer Ausgleichszylindereinheit für zangenförmig betätigbare Elektroden einer Schweißvorrichtung der eingangs erwähnten Art zu vermitteln, welches eine präzise Ansteuerung der Schweißvorrichtung in unterschiedlichen Raumlagen unabhängig von den in diesen Raumlagen auf die Elektroden wirkenden Gewichtskräften ermöglicht.

### Vorteile der Erfindung

Diese Aufgabe wird durch ein Verfahren zur Steuerung einer Ausgleichszylindereinheit der gattungsgemäßen Art mit den Merkmalen des Anspruchs 1 gelöst.

Vorteilhafte Ausgestaltungen des Verfahrens sind Gegenstand der auf Anspruch 1 rückbezogenen Unteransprüche 2 bis 6.

Grundidee der Erfindung ist die Einstellung des Gewichtsausgleichs in unterschiedlichen Raumpositionen der Elektrodenarme durch zunächst weggeregelte und im Anschluß daran druckgeregelte Ansteuerung der Ausgleichszylindereinheit mittels eines hochdynamischen Proportionalventils.

Dabei wird die Kolbenanordnung, nachdem die Schweißvorrichtung eine Schweißstellung eingenommen hat, zunächst weggeregelt in eine vorgebbare Position verfahren und die sich in dieser Position ergebenden Drücke in den Druckräumen ermittelt und die zugehörigen, diese Drücke charakterisierenden Drucksignale in der Steuereinrichtung gespeichert. Die Erfindung nutzt hierbei aus, daß die Druckdifferenz mit der Kraft für den gewünschten Gewichtsausgleich korreliert. Danach erfolgt ein Umschalten von der Wegregelung auf eine Druckregelung, wobei die Drücke in den beiden Druckräumen konstant gehalten werden durch kontinuierliches Erfassen der jeweils den Druck in den Druckräumen repräsentierenden Drucksignale, Vergleichen mit den gespeicherten Drucksignalen und Ansteuern des Proportionalventils in Abhängigkeit von dem Vergleich derart, daß die Differenz der Drücke in den beiden Druckräumen, insbesondere bei einer Betätigung der auch als Schweißdruckzylinder bezeichneten Schweißdruckzylindereinheit, konstant gehalten wird. Auf diese Weise wird ein oberer Zangenarm der Schweißvorrichtung durch den Schließzylinder verfahren, bis er an einem zu schweißenden Blech anliegt. Eine weitere Betätigung des Schweißzylinders übt sodann eine Kraft auf die Ausgleichszylindereinheit aus. Die Druckdifferenz in dieser Position wird durch die Ausgleichszylindereinheit konstant gehalten, wodurch der Gewichtsausgleich beibehalten wird, bis auch die zweite Elektrode durch weiteres Betätigen der Schweißdruckzylindereinheit auf dem zu schweißenden Blech aufliegt, so daß der Schweißvorgang beginnen kann.

Der Druck in den beiden Druckräumen wird vorteilhafterweise durch Drucksensoren erfaßt, die in vorteilhafter Ausbildung auch Teil des Proportionalventils selbst sein können. Es kann alternativ auch vorgesehen sein, die Differenz der Drücke in beiden Druckräumen durch wenigstens einen Differenzdrucksensor zu erfassen. In diesem Falle muß nur ein Signal erfaßt und verarbeitet werden.

Anstelle der Erfassung des Drucks durch Drucksensoren zur Ermittlung der resultierenden Kraft können auch beispielsweise ein oder mehrere Kraftsensoren, beispielsweise eine Kraftmeßdose, an der Kolbenzylinderanordnung angeordnet werden.

Durch Verwendung eines hochdynamischen Proportionalventils, das zunächst abhängig von einem die Position der Kolbenanordnung der Ausgleichszylindereinheit repräsentierenden Wegsignal und sodann von zwei jeweils den Druck in den Druckräumen der Ausgleichszylindereinheit repräsentierenden Drucksignalen von einer Steuereinrichtung angesteuert wird, ist ein präziser und insbesondere schneller Gewichtskraftausgleich realisierbar.

Bevorzugt weist das Proportionalventil eine elektronische Steuereinrichtung, insbesondere wenigstens einen Mikroprozessor auf, durch welche sowohl die wegabhängige als auch die druckabhängige Regelung erfolgt.

Statt eines Mikroprozessors können auch andere Schaltungskomponenten vorgesehen sein. Insbesondere kann als Steuereinrichtung auch rein prinzipiell eine in analoger Schaltungstechnik aufgebaute Steuerschaltung oder dergleichen vorgesehen sein.

### Zeichnung

Weitere Vorteile und Merkmale der Erfindung sind Gegenstand der nachfolgenden Beschreibung sowie der zeichnerischen Darstellung eines Ausführungsbeispiels der Erfindung. In der Figur zeigen:
- Fig. 1: schematisch eine Schweißvorrichtung mit einer erfindungsgemäßen Ausgleichszylindereinheit für den Gewichtsausgleich der Elektrodenarme der Schweißvorrichtung;
- Fig. 2: schematisch eine Ausgleichszylindereinheit der in Fig. 1 dargestellten Schweißvorrichtung und
- Fig. 3a bis 3c: schematisch verschiedene Arbeitsstellungen der in Fig. 1 dargestellten Schweißvorrichtung zur Erläuterung der Funktionsweise der in Fig. 2 dargestellten Ausgleichszylindereinheit.

### Beschreibung der Ausführungsbeispiele

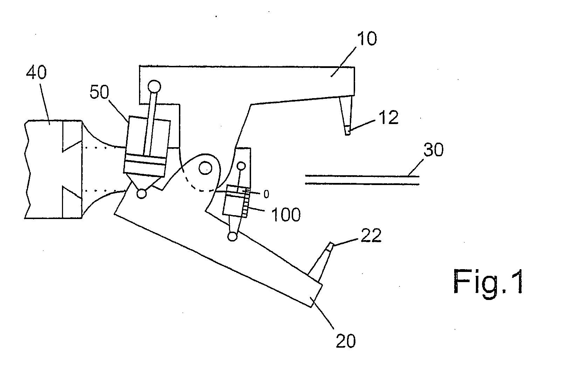

Eine Schweißvorrichtung, auch als Schweißzange bezeichnet, dargestellt in Fig. 1, weist zwei Arme 10, 20 auf, an der Elektroden 12, 22 zum Schweißen von Blechen 30 angeordnet sind. Die Schweißzange ist beispielsweise an einem Roboterarm 40 angeordnet.

Die Schweißzange wird durch eine Schweißdruckzylindereinheit 50 betätigt. Die Feineinstellung der Arme 10, 20 erfolgt durch eine als Ausgleichszylindereinheit 100 bezeichnete Kolbenzylinderanordnung.

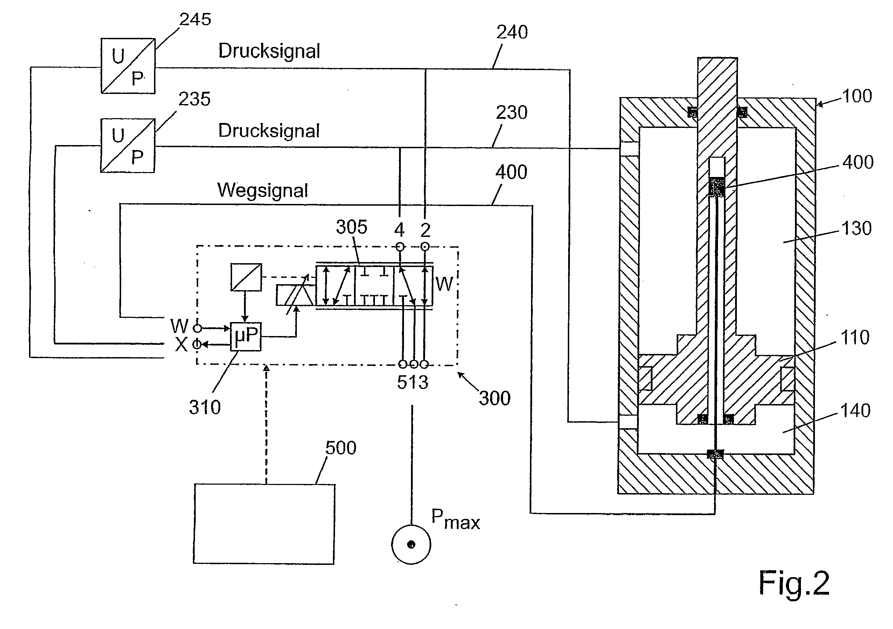

Die Ausgleichszylindereinheit 100 ist schematisch in Fig. 2 dargestellt. Sie weist eine doppelt wirkende Zylindereinheit mit einem Zylinder 100 und zwei durch eine Kolbenanordnung 110 unterteilte Druckräume 130, 140 auf. Beide Druckräume 130, 140 sind durch Druckleitungen 230, 240 mit einem unter Druck stehenden fluidischen Medium (Druckmedium) beaufschlagbar. Der Druck in den beiden Druckräumen 130, 140 wird durch Drucksensoren 235, 245 erfaßt, die in die Kolbenzylinderanordnung integriert sein können.

Die von den Drucksensoren 235, 245 ausgegebenen Drucksignale werden einer Steuereinrichtung, beispielsweise einem Mikroprozessor 310, zugeführt, der Teil einer mit 300 bezeichneten Proportionalventileinheit ist.

Die Proportionalventileinheit 300 kann beispielsweise ein hochdynamisches 5/3-Proportionalwegeventil 305 aufweisen, das in seiner einen (gezeigten) Schaltstellung den Druckraum 130 über die Leitung 230 mit einem Druck Pₘₐₓ beaufschlagt, der an einem auf an sich bekannte Weise bezeichneten Eingang 1 der Proportionalventileinheit 300 anliegt, die über weitere Eingänge 5, 3 und Ausgänge 4, 2 verfügt. Die Ausgänge sind mit den Druckleitungen 230, 240 verbunden. In diesem Falle ist der Druckraum 130 belüftet und der Druckraum 140 entlüftet.

In einer weiteren Schaltstellung ist dagegen der Druckraum 140 mit dem Druckmedium beaufschlagt, während der Druckraum 130 in dieser Schaltstellung entlüftet ist.

Neben den beiden Drucksignalen wird dem Mikroprozessor 310 der Proportionalventileinheit 300 auch ein Wegsignal eines Wegsensors 400 eines Wegsensorsystems 410 zugeführt, abhängig von dem das 5/3-Wegeventil 305 ebenfalls ansteuerbar ist. Der Mikroprozesor 310 selbst wird von einer übergeordneten Steuerung 500 mit Steuersignalen beaufschlagt.

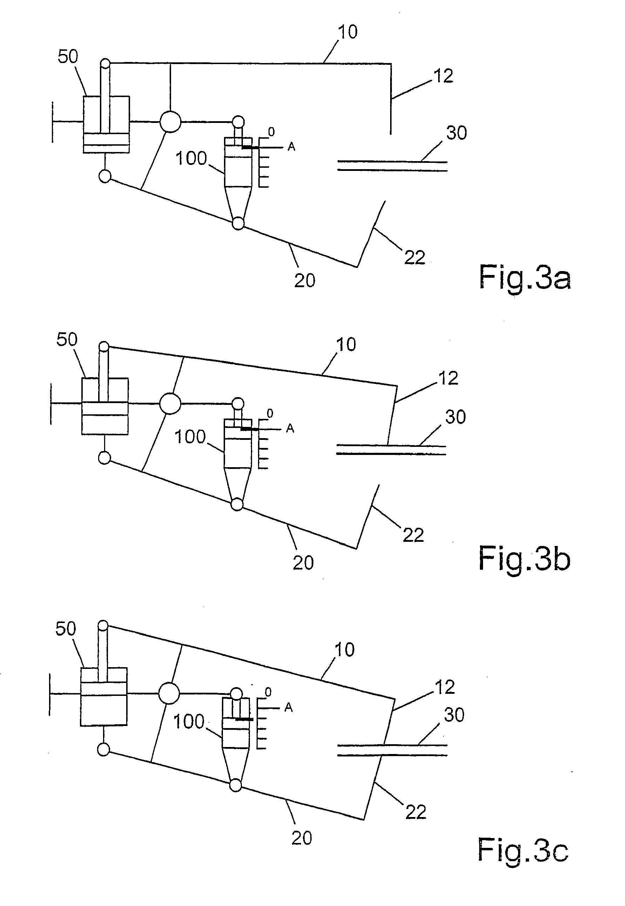

Ein Verfahren zur Steuerung der Ausgleichszylindereinheit 100 als Gewichtsausgleich der Elektrodenarme 10, 20 der Schweißvorrichtung wird nachfolgend in Verbindung mit den Fig. 3a bis 3c beschrieben.

Nachdem die Schweißvorrichtung mittels des Roboterarms 40 in eine gewünschte Schweißstellung verfahren wurde, regelt zunächst der Mikroprozessor 310 mittels des 5/3-Wegeventils 305 die Kolbenanordnung 110 aus ihrer Nullage heraus auf einen (kleinen) Lage-Sollwert A. Dies geschieht mittels einer Weg-Regelung der Kolbenanordnung 110 durch das Wegsignal des Wegsensors 400.

Die zugehörige Kraft, resultierend aus den Drücken in den beiden Druckräumen 130, 140 wird in dieser Position der Kolbenanorndung 110 durch die beiden Drucksensoren 235, 245 oder auch durch einen an sich bekannten - nicht gezeigten - Differenzdrucksensor erfaßt und mittels des Mikroprozessors 310 kraftgeregelt gehalten durch Regeln des 5/3-Ventils 305. Die hierbei ermittelte Druckdifferenz der Drücke in den beiden Ventilräumen 130, 140, die der Kraft für den gewünschten Gewichtsausgleich entspricht, wird gespeichert. Der vorgebbare Lage-Sollwert A der Kolbenanordnung 110 ist dabei so gewählt, daß er in einer vorgebbaren Position, beispielsweise wenige Millimeter über dem Anschlag der Kolbenanordnung 110 positioniert ist, um so eine Druckregelung zu ermöglichen, die am Anschlag der Kolbenanordnung 110 nicht möglich wäre.

Im Anschluß daran wird die Wegregelung abgeschaltet und es wird nur noch die Druckdifferenz mittels des Mikroprozessors 310 durch Ansteuern das 5/3-Proportionalwegeventil 305 auf oben beschriebene Weise konstant gehalten. Die auf den Arm 20 wirkende Kraft wird hierbei insbesondere unabhängig von der Position des Arms 20 im Raum konstant gehalten.

Im nächsten, in Fig. 3b dargestellten Schritt wird nun der obere Arm 10 der Schweißzange durch die Schweißdruckzylindereinheit 50 so verfahren, daß seine Elektrode 12 an dem Blech 30 anliegt. Auch in diesem Falle wird die resultierende Kraft, die die Ausgleichszylindereinheit 100 erzeugt, durch fortwährendes Ansteuern des Proportionalwegeventils 305 konstant gehalten.

In einem letzten, in Fig. 3c dargestellten Schritt wird nun der untere, schwebende Arm 20 aufgrund einer weiteren Betätigung der Schweißdruckzylindereinheit 50 und einer daraus resultierenden Kraftzunahme in der Ausgleichszylindereinheit 100 "nachgezogen". Hierbei erfassen die Drucksensoren 235, 245 jede Änderung des Drucks in den beiden Druckräumen 130, 140. Sobald an einer Seite der Ausgleichszylindereinheit 100 der Druck infolge einer Kraft, die beim Anlegen der Elektroden 12, 22 an das Blech 30 entsteht, verändert wird, verändert die Proportionalventileinheit 300 mittels des Mikroprozessors 310 und des hochdynamischen 5/3-Proportionalwegeventils 305 den Druck durch Be-/Entlüften der beiden Druckräume 130, 140 so lange, bis das gewünschte und gespeicherte Druckverhältnis wieder eingestellt ist. Hierdurch ändert sich die Stellung der Kolbenanordnung 110 in dem Zylinder der Ausgleichszylindereinheit 100, d.h. die Volumenverhältnisse der beiden Druckräume 130, 140 ändern sich. Der Gewichtsausgleich wird auf diese Weise beibehalten.

Die Schweißdruckzylindereinheit 50 wird sodann weiter betätigt, bis auch die zweite Elektrode 22 auf dem zu schweißenden Blech 30 aufliegt, worauf der Schweißvorgang erfolgt.

In der vorstehenden Beschreibung wurde die Kraftmeßeinrichtung zur Erfassung der resultierenden Kraft der Kolbenanordnung 110 durch die Erfassung des Differenzdrucks realisiert. Es versteht sich, daß die Erfindung nicht hierauf beschränkt ist. Es kann auch eine direkte Messung der Kraft, beispielsweise mittels einer Kraftmeßdose, erfolgen.

Der Vorteil des beschriebenen Verfahrens liegt darin, daß sich der Arm 20 in einem "schwimmenden" Zustand befindet und erst beim Schließen der Schweißzange, d.h. beim Aufsetzen der Elektrode 22 auf dem zu schweißenden Blech 30 von der Kolbenzylinderanordnung 100 annähernd kräftefrei gewissermaßen "nachgezogen" wird. Von großem Vorteil ist, daß bei jedem Schweißpunkt und bei jeder Raumlage der Ausgleich auf diese Weise selbsttätig und insbesondere ohne TEACH-IN-Verfahren eingestellt wird. Wenn sich die Raumlage der Schweißzange nicht verändert und sich dadurch die Gewichtsverhältnisse nicht ändern, kann das eingestellte Druckverhältnis für weitere Schweißpunkte gespeichert und übernommen werden.

Von großem Vorteil ist auch, daß äußere Einflüsse, wie Verschleiß, Reibung, Temperaturveränderung oder Kappenabbrand der Elektrode 12, 22 automatisch durch diese Druckregelung kompensiert werden.

Die Erfindung wurde vorstehend anhand einer Schweißvorrichtung beschrieben. Es versteht sich jedoch, daß die Erfindung nicht auf eine Ausgleichszylindereinheit für eine Schweißvorrichtung beschränkt ist, sondern vielmehr auch bei anderen Vorrichtungen, wie z.B. Nietvorrichtungen, US-Schweißvorrichtungen, Handhabungsautomaten und dergleichen, bei denen zwei Arme eine zangenartige Bewegung ausführen, zur Anwendung gelangen kann.

## Patentansprüche

1. Verfahren zur Einstellung eines Gewichtsausgleichs von Elektrodenarmen (10, 20) einer Schweißvorrichtung mit wenigstens einer Schweißdruckzylindereinheit (50) und mit wenigstens einer doppelt wirkenden Ausgleichszylindereinheit (100), welche eine Kolbenanordnung (110) und mindestens zwei durch diese Kolbenanordnung (110) abgeteilte Druckräume (130, 140) aufweist, die über eine Ventilanordnung (300) zur Steuerung einer Antriebsbewegung wahlweise mit einem Druckmedium beaufschlagt werden, wobei die Ventilanordnung (300) ein Proportionalventil (305) umfaßt, das von einer Steuereinrichtung (310) abhängig von einem die Position der Kolbenanordnung (110) repräsentierenden Wegsignal und/oder von zwei jeweils den Druck in den Druckräumen (130, 140) repräsentierenden Drucksignalen angesteuert wird, **gekennzeichnet durch** folgende Schritte:
- in einer Arbeitsstellung der Schweißvorrichtung Ansteuern des Proportionalventils (305) in Abhängigkeit von dem Wegsignal derart, daß die Kolbenanordnung (110) in eine vorgebbare Position verfährt;
- Ermitteln der sich in dieser Position ergebenden Drücke in den Druckräumen (130, 140) und Speichern der zugehörigen Drucksignale in der Steuereinrichtung (310);
- kontinuierliches Erfassen der jeweils den Drücken in den Druckräumen (130, 140) entsprechenden Drucksignale, Vergleichen mit den gespeicherten Drucksignalen und Ansteuern des Proportionalventils (305) in Abhängigkeit von dem Vergleich derart, daß die aus den Drücken in den beiden Druckräumen (130, 140) resultierende Kraft der Kolbenanordnung (110) bei einer Betätigung der Schweißdruckzylindereinheit (50) konstant gehalten wird.

2. Verfahren nach Anspruch 1, **dadurch gekennzeichnet, daß** der Druck in den beiden Druckräumen (130, 140) durch Drucksensoren (235, 245) erfaßt wird.

3. Verfahren nach Anspruch 2, **dadurch gekennzeichnet, daß** die Drucksensoren (235, 245) Teil des Proportionalventils (305) sind.

4. Verfahren nach Anspruch 1, **dadurch gekennzeichnet, daß** die Differenz des Drucks in den beiden Druckräumen (130, 140) durch wenigstens einen Differenzdrucksensor erfaßt wird.

5. Verfahren nach Anspruch 1, **dadurch gekennzeichnet, daß** die resultierenden Kraft der Kolbenanordnung (110) durch eine Kraftmeßeinrichtung erfaßt wird.

6. Verfahren nach Anspruch 5, **dadurch gekennzeichnet, daß** die Kraftmeßeinrichtung eine Kraftmeßdose ist.

## Claims

1. Method of setting a weight compensation for electrode-carrying arms (10, 20) of a welding device, the welding device having at least one cylinder unit (50) for welding pressure and having at least one double-acting compensating cylinder unit (100) which has a piston arrangement (110) and at least two pressure spaces (130, 140) which are separated by this piston arrangement (110) and to which a pressurised medium can be selectively applied via a valve arrangement (300) to control a driving movement, the valve arrangement (300) comprising a proportional valve (305) which is actuated by a control device (310) as a function of a travel signal representing the position of the piston arrangement (110) and/or as a function of two pressure signals respectively representing the pressures in the pressure spaces (130, 140), **characterised by** the following steps:
when the welding device is in a working position, actuation of the proportional valve (305) as a function of the travel signal in such a way that the piston arrangement (110) moves to a presettable position;
- determination of the pressures which arise in the pressure spaces (130, 140) in this position and storage of the associated pressure signals in the control device (310);
- continuous sensing of the pressure signals respectively corresponding to the pressures in the pressure spaces (130, 140), comparison thereof with the stored pressure signals, and actuation of the proportional valve (305) as a function of the comparison, in such a way that the force from the piston arrangement (110) resulting from the pressures in the two pressure spaces (130, 140) is held constant when the cylinder unit (50) for welding pressure is actuated.

2. Method according to claim 1, **characterised in that** the pressure in the two pressure spaces (130, 140) is sensed by pressure sensors (235, 245).

3. Method according to claim 2, **characterised in that** the pressure sensors (235, 245) are part of the proportional valve (305).

4. Method according to claim 1, **characterised in that** the difference in pressure in the two pressure spaces (130, 140) is sensed by at least one difference-in-pressure sensor.

5. Method according to claim 1, **characterised in that** the resulting force from the piston arrangement (110) is sensed by a force measuring means.

6. Method according to claim 5, **characterised in that** the force measuring means is a load cell.

## Revendications

1. Méthode de réglage d'une compensation de poids pour des bras porteurs d'électrodes (10, 20) d'un dispositif de soudage, le dispositif de soudage ayant au moins une unité vérin (50) pour la pression de soudage et ayant au moins une unité vérin compensateur à double effet (100) qui a un arrangement piston (110) et au moins deux espaces pression (130, 140) qui sont séparés par cet arrangement piston (110) et à laquelle un médium pressurisé peut être sélectivement appliqué par l'intermédiaire d'un arrangement valve (300) pour commander un mouvement d'entraînement, l'arrangement valve (300) comprenant une valve proportionnelle (305) qui est actionnée par un dispositif de commande (310) en fonction d'un signal de déplacement représentant la position de l'arrangement piston (110) et/ou en fonction de deux signaux de pression représentant respectivement les pressions dans les espaces pression (130, 140), **caractérisée par** les étapes suivantes:
- lorsque le dispositif de soudage est dans une position de travail, fractionnement de la valve proportionnelle (305) en fonction du signal de déplacement de telle façon que l'arrangement piston (110) passe à une position préréglable;
- la détermination des pressions rencontrées dans les espaces pression (130, 140) dans cette position et la mémorisation des signaux de pression associés dans le dispositif de commande (310);
- le captage continu des signaux de pression correspondant respectivement aux pressions dans les espaces pression (130, 140), la comparaison de ces derniers avec les signaux de pression mémorisés, et l'actionnement de la valve proportionnelle (305) en fonction de la comparaison, de telle façon que la force de l'arrangement piston (110) résultant des pressions dans les deux espaces pression (130, 140) est maintenue constante lorsque l'unité vérin (50) pour la pression de soudage est actionnée.

2. Méthode selon la revendication 1, **caractérisée en ce que** la pression dans les deux espaces pression (130, 140) est captée par des capteurs de pression (235, 245).

3. Méthode selon la revendication 2, **caractérisée en ce que** les capteurs de pression (235, 245) font partie de la valve proportionnelle (305).

4. Méthode selon la revendication 1, **caractérisée en ce que** la différence de pression dans les deux espaces pression (130, 140) est captée par au moins un capteur de différence de pression.

5. Méthode selon la revendication 1, **caractérisée en ce que** la force résultante de l'arrangement piston (110) est captée par un moyen de mesure de force.

6. Méthode selon la revendication 5, **caractérisée en ce que** le moyen de mesure de force est une cellule de charge.
